# EUROPÄISCHE PATENTSCHRIFT

(11) **EP 0 683 739 B1**
(45) Veröffentlichungstag und Bekanntmachung des Hinweises auf die Patenterteilung: **21.05.1997**
(21) Anmeldenummer: 94908319.0
(22) Anmeldetag: 16.02.1994
(51) Int. Cl.: B60S 1/24, F16C 11/06, F16C 11/04

(54) **KONZENTRISCHE ANTRIEBSLAGER ZUM ANTRIEB VON ZWEI ANTRIEBSSTANGEN FÜR EINE SCHEIBENWISCHANLAGE**
CONCENTRIC DRIVING BEARING FOR DRIVING TWO WINDSCREEN WIPER DRIVING RODS
PALIERS D'ENTRAINEMENT CONCENTRIQUES POUR L'ENTRAINEMENT DE DEUX BIELLES DE COMMANDE D'UN SYSTEME D'ESSUIE-GLACE

(30) Priorität: 20.02.1993 DE 4305304
(43) Veröffentlichungstag der Anmeldung: 29.11.1995
(73) Patentinhaber: ITT Automotive Europe GmbH, 60488 Frankfurt am Main (DE)
(72) Erfinder: BÜHL, Harro, D-74366 Kirchheim (DE); EGNER-WALTER, Bruno, D-74076 Heilbronn (DE); FEIN, Peter, D-71229 Leonberg (DE); KLINAR, Robert, D-74321 Bietigheim-Bissingen (DE)
(86) Internationale Anmeldenummer: EP9400439
(87) Internationale Veröffentlichungsnummer: WO9419220

(56) Entgegenhaltungen:
- FR-A- 2 030 879
- FR-A- 2 222 893
- GB-A- 383 900
- US-A- 3 441 300

## Beschreibung

Die Erfindung betrifft ein Getriebe zum Kuppeln von Antriebsstangen für den Antrieb von Scheibenwischern an einer Antriebswelle. Bei Scheibenwischanlagen wird vielfach angestrebt, zwei Wischarme durch einen gemeinsamen Elektromotor anzutreiben. Da die Antriebswelle des Elektromotors eine drehende Bewegung durchführt, muß diese noch in eine pendelnde Bewegung zum Antrieb der Wischerarme umgesetzt werden. Dies geschieht in der Regel mit Hilfe eines oder mehrerer Kurbelhebel und diesen zugeordneten Antriebsstangen.

Aus der EP-A-0 399 811 ist es bekannt, zwei Wischerarme zueinander parallel durch einen gemeinsamen Elektromotor anzutreiben. Aus der DE-A-3 347 441 ist es bekannt, an einer Kurbelstange zwei Kugelbolzen vorzusehen. Entsprechendes gilt für die EP-A-0 316 832. Aus dieser sind Doppelkugelbolzen bekannt, die an einem Hebel zur Anlenkung von Schubstangen dienen.

Nachteilig bei einer derartigen Konstruktion ist es, daß derartige Doppelkugelbolzen einen relativ großen Bau- und Betriebsraum benötigen, der insbesondere in dem Vorbau eines Fahrzeugs oft nicht zur Verfügung steht. Durch die in zwei unterschiedliche Richtungen abstehenden bekannten Doppelkugelbolzen werden auch Maßnahmen benötigt, um die hierdurch auftretenden Hebelkräfte aufzufangen.

Aus der GB-A- 383,900 ist eine Scheibenwischeranlage ersichtlich, bei der zwei Antriebsstangen über ein Gelenk mit einem von der Abtriebswelle eines Elektromotors umlaufend angetriebenen Kurbelhebel gekuppelt sind. Zu dem Gelenk gehören Lagerbuchsen, die jeweils an einem Ende einer der beiden Antriebsstangen vorgesehen sind, wobei eine Lagerbuchse der einen Antriebsstange in einem axialen Abstand zwischen zwei Lagerbuchsen der anderen Antriebsstange angeordnet sind. Die so miteinander verschachtelt angeordneten und fluchtend zueinander ausgerichteten Lagerbuchsen werden von einem an dem Kurbelhebel befestigten zylindrischen Gelenkzapfen durchsetzt. Durch die in axialer Richtung hintereinanderliegende Anordnung der an den beiden Antriebsstangen vorgesehenen Lagerbuchsen ist auch in diesem Fall eine nachteilig große Bauhöhe in axialer Richtung des Gelenkes zu verzeichnen.

Die Erfindung geht daher aus von einem Getriebe der sich aus dem Oberbegriff des Anspruchs 1 ergebenden Gattung. Aufgabe der Erfindung ist es, ein derartiges Getriebe als besonders flachbauende und damit bau- und betriebsraumsparende Lösung auszugestalten. Darüber hinaus soll die Kraft zum Antrieb mehrerer Wischerarme möglichst nur in einem Punkt angreifen, um die Belastung des Wischermotors zu reduzieren, wobei die Kräfte der angetriebenen Stangen möglichst in einer Ebene laufen sollen.

Die Aufgabe wird durch die sich aus dem kennzeichnenden Teil des Anspruchs 1 ergebende Merkmalskombination gelöst. Die Erfindung besteht im Prinzip also darin, die für den Antrieb der beiden Wischerarme benötigte Kraft an einem gemeinsamen Punkt abzugreifen. Damit kann die Kraft über die Antriebsstangen in einer gemeinsamen Ebene verteilt werden, was zu einer erheblichen Platzersparnis, aber auch zur Vermeidung von Hebelkräften führt, die die Kraftübertragung ungünstig beeinflussen können.

Eine besonders einfache Lösung, bei der die beiden Antriebsstangen in ihrer Arbeitsweise im wesentlichen zueinander gleichwertig behandelt werden, ergibt sich durch die Anwendung der Merkmalskombination nach Anspruch 2. Dabei sind die beiden Lagerringe der Antriebsstangen zentrisch zueinander verschachtelt und sitzen gemeinsam auf dem an der Motorkurbel befestigten Lagerbolzen.

Soweit die geometrischen Bedingungen eine derartige Anordnung nicht zulassen, empfiehlt sich in Weiterbildung der Erfindung eine Merkmalskombination nach Anspruch 3. Hierbei trägt eine der beiden Antriebsstangen den Lagerbolzen, während die Motorkurbel vorzugsweise am äußeren Lagerring angeordnet ist und damit den Lagerring der zweiten Antriebsstange umfaßt. Selbstverständlich kann aber auch im Rahmen der Erfindung die Zuordnung von Motorkurbel und zweiter Antriebsstange vertauscht werden, so daß der innere Lagerring mit der Motorkurbel und der äußere Lagerring mit der zweiten Antriebsstange verbunden ist.

In vielen Fällen mag es genügen, daß die Lagerringe einander bzw. den Kugelbolzen nur teilweise umfassen. Hierdurch können sich Vereinfachungen bei dem Zusammenbau des Getriebes ergeben. Soll das Getriebe zur Aufnahme möglichst großer Kräfte geeignet sein, so empfiehlt sich in Weiterbildung der Erfindung die Anwendung der Merkmalskombination nach Anspruch 4. Dabei wird wahlweise von den Merkmalen Gebrauch gemacht, daß die Symmetrieebenen der beiden Lagerringe sich einander decken und/oder daß die Lagerschalen den Lagerbolzen bzw. die zweite Lagerschale in einem geschlossenen Ring umschließen.

Um in besonders einfacher Weise in Längsrichtung des Lagerbolzens wirkende Kräfte aufnehmen zu können und auf diese Weise eine gesonderte, in diese Richtung wirkende Sicherung zu vermeiden, empfiehlt sich in Weiterbildung der Erfindung die Anwendung der Merkmalskombination nach Anspruch 5. Dabei ergeben sich Lagerflächen, die in Axialrichtung des Lagerbolzens gekrümmt sind, so daß der erste Lagerring den Lagerbolzen sowie der zweite Lagerring den ersten Lagerring in Axialrichtung des Bolzens in gekrümmter Form umgibt. In Längsrichtung des Bolzens werden dadurch Flächen geformt, die den Lagerbolzen bzw. die Außenfläche des ersten Lagerrings hinterschneiden und so eine in Axialrichtung des Lagerbolzens wirkende Kraft aufnehmen.

Eine besonders einfache Ausgestaltung eines gemäß Anspruch 5 ausgestalteten Lagers ergibt sich durch die Anwendung der Merkmale nach Anspruch 6. Die Lagerflächen sind somit jeweils ringförmige Abschnitte einer Kugelfläche.

Ein Ausführungsbeispiel der Erfindung wird nachfolgend anhand der Zeichnung beschrieben.

Dabei zeigt
- Figur 1: ein erstes Ausführungsbeispiel der Erfindung und
- Figur 2: ein zweites Ausführungsbeispiel der Erfindung.

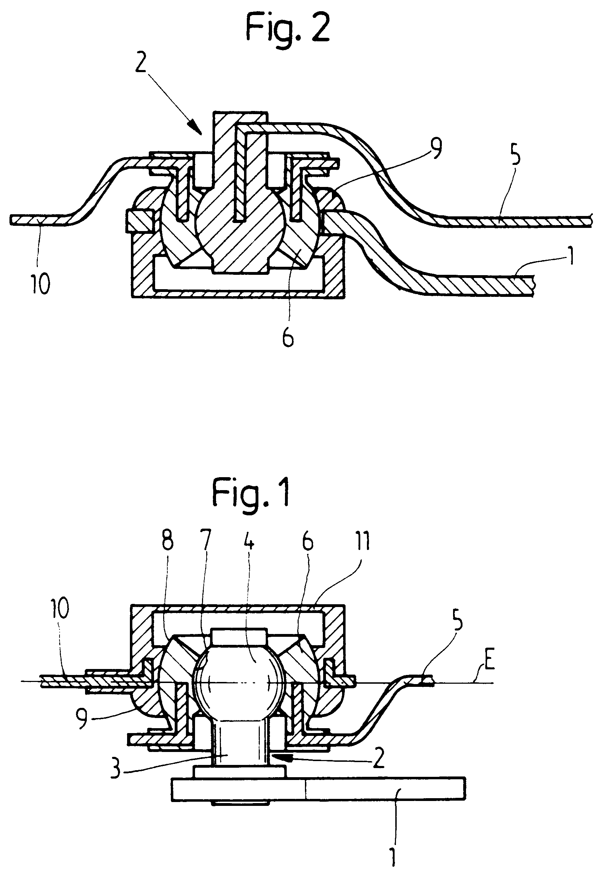

In Figur 1 ist der äußere Endabschnitt einer Motorkurbel 1 gezeigt, an der in geeigneter Weise ein Lagerbolzen 2 unlösbar befestigt ist, so daß Motorkurbel und Lagerbolzen eine mechanische Einheit bilden. Der Lagerbolzen ragt mit seinem Bolzenschaft 3 durch die Motorkurbel 1, während er in seinem von der Motorkurbel 1 abgewandten Endbereich in einen im wesentlichen kugelförmigen Bolzenkopf 4 übergeht.

Eine erste Antriebsstange 5 ist in geeigneter Weise mit einem ersten Lagerring 6 verbunden, der den Bolzenkopf 4 ringförmig umgibt. Die innere Lagerfläche 7 des ersten Lagerrings 5 ist entsprechend der kugeligen Oberfläche des Bolzenkopfes 4 gekrümmt, um zum einen eine gewisse Schwenkbewegung der ersten Antriebsstange 5 gegenüber dem Bolzenkopf zuzulassen und um andererseits eine Sicherung gegenüber Kräften zu haben, die den Lagerring 6 gegenüber dem Bolzenkopf 4 in Längsrichtung des Bolzenschaftes 3 zu verschieben suchen. In dem in Figur 1 dargestellten Ausführungsbeispiel ist die Antriebsstange 5 mit dem ersten Lagerring 6 vergossen. Es sind aber auch andere unlösbare Befestigungsarten im Rahmen der Erfindung möglich.

Der erste Lagerring 6 besitzt weiterhin eine kugelige Außenfläche 8, die als Lagerfläche für einen zweiten Lagerring 9 dient. Dabei ist die kugelige Innenfläche des zweiten Lagerrings 9 in ihrer Krümmung der Außenfläche 8 des ersten Lagerrings 6 angepaßt und es umschließt der zweite Lagerring 9 den ersten Lagerring 6 in der Ebene voll. Entsprechendes gilt für den ersten Lagerring 6 hinsichtlich des Bolzenkopfes 4.

Mit dem zweiten Lagerring 9 ist eine zweite Antriebsstange 10 durch Vergießen unlösbar verbunden. Um eine größere Festigkeit des zweiten Lagerrings zu erhalten und zur Abdichtung des Doppellagers dient ein Deckel 11 welcher mit dem zweiten Lagerring 9 einstückig vereint ist.

Wie aus Figur 1 ersichtlich liegen die erste und zweite Antriebsstange 5 und 10 im wesentlichen in der gleichen Ebene E.

Das gilt auch für das Ausführungsbeispiel nach Figur 2. Der wesentliche Unterschied zwischen den Ausgestaltungen nach Figur 1 und Figur 2 ist der, daß gemäß Figur 2 die Motorkurbel 1 am zweiten Lagerring 9, also ganz außen am Lager angreift, während gemäß Figur 1 die Motorkurbel 1 mit dem innenliegenden Lagerbolzen 2 verbunden ist. In den Ausführungsbeispielen ist der erste Lagerring 6 immer mit einer Antriebsstange verbunden. Dies ist aber gemäß der Erfindung nicht zwingend notwendig. Die Motorkurbel 1 kann gegebenenfalls auch an dem ersten Lagerring 6 angreifen. Auch in anderer Weise können die Zuordnungen zwischen Kurbel und Antriebsstangen beliebig im Rahmen der Erfindung vertauscht werden, in dem beispielsweise die zweite Antriebsstange 10 am Lagerbolzen 2 und die erste Antriebsstange 5 am ersten Lagerring 6 angreift.

## Patentansprüche

1. Getriebe zum Kuppeln von Antriebsstangen für den Antrieb von Scheibenwischerarmen an eine Antriebswelle, insbesondere Motorwelle, wobei die Antriebswelle über einen Kurbeihebel (1) und zwei an diesem angeordnete Lager (2, 6; 6, 9) zwei Antriebsstangen (5, 10) für zwei Wischerarme antreibt und die zwei Lager (2, 6; 6, 9) ineinander verschachtelt angeordnet sind, dadurch **gekennzeichnet**, daß ein erster Lagerring (6) einen Lagerbolzen (2) und ein zweiter Lagerring (9) den ersten Lagerring (6) umgreift.

2. Getriebe nach Anspruch 1, dadurch **gekennzeichnet**, daß die Motorkurbel (1) mit dem Lagerbolzen (2) versehen ist, den der erste Lagerring (6) zum Antrieb der ersten Antriebsstange (5) umgreift und daß der zweite Lagerring (9) zum Antrieb der zweiten Antriebsstange (10) den ersten Lagerring (6) umgreift (Fig. 1).

3. Getriebe nach Anspruch 1, dadurch **gekennzeichnet**, daß an der ersten Antriebsstange (5) der Lagerbolzen (2) befestigt ist, den der mit der zweiten Antriebsstange (10) verbundene erste Lagerring (6) umgreift und daß der mit dem Kurbelhebel (1) verbundene zweite Lagerring (9) den ersten Lagerring (6) umgreift.

4. Getriebe nach einem der vorangegangenen Ansprüche, dadurch **gekennzeichnet**, daß der Lagerbolzen (2) von dem ersten Lagerring (6) und dieser von dem zweiten Lagerring (9) konzentrisch und insbesondere in Form eines geschlossenen Rings umschlossen ist.

5. Getriebe nach einem der vorangegangenen Ansprüche, dadurch **gekennzeichnet**, daß die einander zugeordneten Lagerflächen (7, 8) des Lagerbolzens (4) und der beiden Lagerringe (6, 8) konkav bzw. konvex gerundet sind.

6. Getriebe nach Anspruch 5, dadurch **gekennzeichnet**, daß die konvexen und konkaven Lagerflächen (4, 7, 8) kugelförmig gerundet sind.

## Claims

1. A gear for coupling actuator rods for actuating windscreen wiper arms to a driving shaft, in particular, a motor shaft, with the driving shaft, by way of a crank lever (1) and two bearings (2,6;6,9) mounted on the crank lever, driving two actuator rods (5,10) for two wiper arms, and the two bearings (2,6; 6,9) are nested in one another,
characterized in that a first bearing ring (6) embraces a bearing bolt (2) and a second bearing ring (9) embraces the first bearing ring (6).

2. A gear as claimed in claim 1,
characterized in that the motor crank (1) includes the bearing bolt (2) embraced by the first bearing ring (6) for driving the first actuator rod (5), and in that the second bearing ring (9) for driving the second actuator rod (10) embraces the first bearing ring (6) (Figure 1).

3. A gear as claimed in claim 1,
characterized in that fixed to the first actuator rod (5) is the bearing bolt (2) embraced by the first bearing ring (6) connected to the second actuator rod (10), and in that the second bearing ring (9) connected to the crank lever (1) embraces the first bearing ring (6).

4. A gear as claimed in any one of the preceding claims,
characterized in that the bearing bolt (2) is embraced by the first bearing ring (6) and the latter is embraced by the second bearing ring (9) in a concentric way and especially in the form of a closed ring.

5. A gear as claimed in any one of the preceding claims,
characterized in that the bearing faces (7,8) of the bearing bolt (4) and those of the two bearing rings (6,8) associated with one another are of a concave and convex rounding, respectively.

6. A gear as claimed in claim 5,
characterized in that the convex and concave bearing faces (4,7,8) are spherically rounded.

## Revendications

1. Mécanisme de transmission pour accoupler à un arbre d'entraînement, notamment un arbre de moteur, des tiges d'entraînement destinées à entraîner des bras d'essuie-glaces, l'arbre d'entraînement, entraînant deux tiges d'entraînement (5, 10) pour deux bras d'essuie-glaces par l'intermédiaire d'un levier à manivelle (1) et de deux paliers (2, 6 ; 6, 9) agencés sur ce levier,et les deux paliers (2, 6 ; 6, 9) étant disposés en imbrication l'un dans l'autre, **caractérisé** en ce qu'une première bague de palier (6) s'engage autour d'un axe de palier (2), et une deuxième bague de palier (9) s'engage autour de la première bague de palier (6).

2. Mécanisme de transmission selon la revendication 1, **caractérisé** en ce que la manivelle de moteur (1) est pourvue de l'axe de palier (2), autour duquel s'engage la première bague de palier (6) afin d'entraîner la première tige d'entraînement (5), et en ce que la deuxième bague de palier (9) s'engage autour de la première bague de palier (6) afin d'entraîner la deuxième tige d'entraînement (10) (figure 1).

3. Mécanisme de transmission selon la revendication 1, **caractérisé** en ce que l'axe de palier (2), autour duquel s'engage la première bague de palier (6) assemblée à la deuxième tige d'entraînement (10), est fixé sur la première tige d'entraînement (5), et en ce que la deuxième bague de palier (9), assemblée au levier à manivelle (1), s'engage autour de la première bague de palier (6).

4. Mécanisme de transmission selon l'une quelconque des revendications précédentes, **caractérisé** en ce que l'axe de palier (2) est entouré concentriquement par la première bague de palier (6), et la première bague de palier (6) est entourée par la deuxième bague de palier (9) concentriquement et notamment sous la forme d'un anneau fermé.

5. Mécanisme de transmission selon l'une quelconque des revendications précédentes, **caractérisé** en ce que les faces de palier mutuellement associées (7, 8) de l'axe de palier (2) et des deux bagues de palier (6, 9) présentent un arrondi respectivement concave ou convexe.

6. Mécanisme de transmission selon la revendication 5, **caractérisé** en ce que les faces de palier convexes et concaves (4, 7, 8) présentent un arrondi sphérique.
